# EUROPÄISCHE PATENTSCHRIFT

(11) **EP 3 353 460 B1**
(45) Veröffentlichungstag und Bekanntmachung des Hinweises auf die Patenterteilung: **05.05.2021**
(21) Anmeldenummer: 16757593.5
(22) Anmeldetag: 16.08.2016
(51) Int. Cl.: F16L 55/11, F16B 31/02, F16B 23/00, F16B 35/06, F16B 33/00, F16B 35/02

(54) **VERSCHLUSSSCHRAUBE**
SCREW PLUG
BOUCHON FILETÉ

(30) Priorität: 25.09.2015 DE 102015116301
(43) Veröffentlichungstag der Anmeldung: 01.08.2018
(73) Patentinhaber: Voss Automotive GmbH, 51688 Wipperfürth (DE)
(72) Erfinder: HAGEN, Harald, 51688 Wipperfürth (DE); ROSOWSKI, Evelin, 51679 Wipperfürth (DE); KLEHR, Adrian, 58809 Neuenrade (DE); BRANDT, Josef, 51688 Wipperfürth (DE)
(74) Vertreter: Patent- und Rechtsanwälte Dr. Solf & Zapf
(86) Internationale Anmeldenummer: PCT/EP2016/069407
(87) Internationale Veröffentlichungsnummer: WO 2017/050490

(56) Entgegenhaltungen:
- EP-A1- 0 984 176
- DE-A1-102010 017 756
- US-A- 5 957 641
- US-A1- 2014 241 826

## Beschreibung

Die vorliegende Erfindung betrifft eine Verschlussschraube für eine Austrittsöffnung von Fluiden führenden Gehäusen umfassend einen kreiszylindrischen Einschraubabschnitt mit einem Außengewinde und einen an einem Ende des Einschraubabschnitts gegenüber dem Einschraubabschnitt im Außendurchmesser vergrößerten Anlageflansch, wobei der Einschraubabschnitt mit dem Anlageflansch als einstückiges, materialeinheitliches Kunststoff-Spritzgussteil ausgebildet ist, sowie der Einschraubabschnitt mit einem Boden einendig verschlossen ist und in Längsrichtung mittig durch den Anlageflansch und den Einschraubabschnitt eine Ausnehmung als Innenangriff für ein Werkzeug verläuft, die am Boden endet und dem Boden gegenüberliegend eine Einstecköffnung für das Werkzeug aufweist.

Eine Verschlussschraube der vorstehend beschriebenen Art für die Hydraulik ist zum Beispiel aus der DE 10 2013 101 972 A1 bekannt. Derartige Verschlussschrauben werden bei Hydraulikbauteilen bzw. hydraulischen Komponenten beispielsweise im Maschinenbau und in der Fahrzeugtechnik verwendet.

Aus der US 2014/241826 A1 ist ein Befestigungsmittel mit einer Sollbruchstelle bekannt.

Für metallische Verbindungselemente ist ein Anzugsmoment von 17 Nm allgemein üblich. Ein derartiges Anzugsmoment ist auch für Verschlussschrauben aus Kunststoff erforderlich. Hierbei ist für ein Abreißdrehmoment mindestens eine 2,5-fache Sicherheit zum Anzugsmoment erforderlich. Diese Anforderungen können aber bei einer Verschlussschraube, die lediglich über einen Innenangriff, der zum Beispiel als Kreuzschlitz ausgeführt ist, nicht aufgebracht werden.

Ebenfalls ist es bekannt, Verschlussschrauben mit einem Außenangriff am Anschlag körper auszubilden, wobei zusätzlich ein Innenangriff vorhanden ist, der durch einen Schlitz im Anschlagkörper gebildet ist. Hierdurch wird aber der Anschlagkörper geschwächt, so dass auch hier die erforderlichen Anzugsmomente sowie das geforderte Abreißdrehmoment nicht verwirklicht werden können. Demnach besteht hierbei die Gefahr, dass bei einem Abriss des Anschlagkörpers aus dem in der Einschrauböffnung verbleibenden offenen Einschraubabschnitt zum Beispiel Hydraulikflüssigkeit unkontrolliert austreten kann. Zudem ist ein Herauslösen des Einschraubabschnitts ohne Anschlagkörper schwierig.

Der vorliegenden Erfindung liegt die Aufgabe zu Grunde, eine Verschlussschraube aus Kunststoff der eingangs beschriebenen Art derart zu verbessern, dass die für metallische Verbindungselemente üblichen Anzugsmomente von beispielsweise 17 Nm gewährleistet werden und gleichzeitig der Sicherheitsfaktor bei Kopfabriss beispielsweise auf 2 reduziert werden kann, und zwar im Vergleich zu den üblichen Sicherheitsfaktoren von 2,5 bis 3. Hierbei werden die Angaben der Normen DIN 74324-1 vom Februar 1996 und ISO 7628 vom 1. Februar 2010.zu Grunde gelegt.

Erfindungsgemäß wird dies dadurch erreicht, dass der Anlageflansch an seinem äußeren Umfang einen Außenangriff für ein Werkzeug aufweist, wobei zwischen dem Außenangriff und dem Innenangriff eine umlaufende innere Ausnehmung mit einer Flanschöffnung ausgebildet ist, und im Übergangsbereich zwischen dem Anlageflansch und dem Einschraubabschnitt eine derartige Wandausbildung vorhanden ist, dass für einen Abriss des Anlageflansches im eingeschraubten Zustand des Einschraubabschnitts und der Anlage des Anlageflansches aufgrund eines gegenüber einem zulässigen Anzugsmoment überhöhten Abrissmomentes am Außenangriff in Einschraubrichtung gesehen am Ende des Einschraubabschnitts und hinter dem Boden ein Abrissbereich ausgebildet ist, so dass der Kraftfluss beim Abriss nicht durch den Boden verläuft, wobei eine derartig minimale Eingriffslänge der Ausnehmung für den Innenangriff vorhanden ist, dass ein Lösen der Verschlussschraube mittels eines in dem Innenangriff eingesetzten Werkzeuges möglich ist. Erfindungsgemäß wird demnach erreicht, dass bei einem Kopfabriss die Verschlussschraube und damit auch die Anschlussbohrung weiterhin durch den Boden verschlossen sind, so dass kein schlagartiger Druckverlust auftreten kann. Ein derartiger Fehler ist dann nur von einer Leckage begleitet, die durch den Gewindebereich möglich ist. Durch diese Leckage erfolgt gleichzeitig eine Fehlersignalisierung. Durch die minimal verbleibende Eingriffslänge ist aber nach dem Kopfabriss der Einschraubabschnitt demontierbar.

Zweckmäßigerweise ist die minimale Eingriffslänge für den Innenangriff nach Abriss entsprechend EN ISO 14579 vom 2. Mai 2012 bemessen und beträgt insbesondere 2,9 mm. Diese Bemessung ermöglicht eine sichere Drehmomentübertragung mittels des eingesetzten Werkzeuges, wo beispielsweise ein Losdrehmoment von 2,5 Nm vorhanden ist .Hierbei ist das Losdrehmoment derart dimensioniert, dass kein Lösen durch Vibration erfolgen kann und auch keine Lösbarkeit von Hand gegeben ist. Erfindungsgemäß ist es weiterhin von Vorteil, wenn die minimale Eingriffslänge zwischen der Bodenfläche des Anlageflansches und einer inneren Bodenfläche des Innenangriffs ausgebildet ist.

Erfindungsgemäß ist der Anlageflansch derart ausgebildet, dass er eine innere Ausnehmung aufweist, so dass eine äußere Umfangswandung ausgebildet ist, die eine obere Flanschöffnung umschließt, und im Anlageflansch zwischen dem Innenangriff und der Umfangswandung die innere Bodenfläche des Flansches der Flanschöffnung gegenüberliegend ausgebildet ist. Weiterhin ist die Einstecköffnung des Innenangriffs in Einschraubrichtung gesehen gegenüber der Bodenfläche des Anlageflansches zurückversetzt angeordnet, so dass ein in Richtung auf die Flanschöffnung von der Bodenfläche des Flansches vorstehender, unterhalb der Flanschöffnung endender und die Einstecköffnung umfassender Stutzenabschnitt ausgebildet ist. Somit liegt der Innenangriff unterhalb der Flanschöffnung und kann derart dimensioniert werden, dass das gewünschte Losdrehmoment mittels des eingesetzten Schlüssels aufgebracht werden kann. Hierbei ist gleichzeitig sichergestellt, dass eine Materialverformung nicht auftritt.

Zur Ausbildung des Abrissbereiches hinter dem Boden in Einschraubrichtung gesehen ist es zweckmäßig, wenn die in Einschraubrichtung weisende Bodenfläche des Bodens in Einschraubrichtung versetzt insbesondere zwischen den beiden Enden des Einschraubabschnitts angeordnet ist, wobei ein konvex gekrümmter Verlauf vorteilhaft ist. Für die Ausbildung des Innenangriffs ist es hierbei ebenfalls zweckmäßig, wenn dieser derart ausgebildet ist, dass die axiale Länge ausgehend von seiner Einstecköffnung bis zu seiner inneren Bodenfläche im Bereich des Endes des Einschraubabschnitts derart ist, dass das Außengewinde in Einschraubrichtung gesehen hinter der inneren Bodenfläche des Innenangriffs endet. Eine vorteilhafte Ausbildung der erfindungsgemäßen Verschlussschraube besteht darin, dass der Boden derart geformt ist, dass er einen in Richtung auf das freie Ende des Einschraubabschnitts versetzt mittleren Bodenabschnitt aufweist sowie einen diesen mittleren Bodenabschnitt umschließenden Bodenabschnitt, der mit einer Umfangswandung des Einschraubabschnitts verbunden ist. Der Bodenabschnitt, der den mittleren Bodenabschnitt umschließt, besitzt eine Breite B, insbesondere zwischen der Umfangswandung und dem Innenangriff, und ist über einen Wandungsabschnitt, der die Bodenfläche der inneren Ausnehmung aufweist, mit dem den Außenangriff aufweisenden Bereich des Anlageflansches verbunden, der eine radiale Breite A besitzt, wobei die Breite B 20 % bis 30 % größer ist als die Breite A.

Der Außenangriff ist vorteilhafterweise als Außenmehrkant, insbesondere als regelmäßiger Sechskant ausgebildet.

Erfindungsgemäß kann es weiterhin vorteilhaft sein, wenn die äußere Umfangswandung des Anlageflansches und der Stutzenabschnitt des Innenangriffs durch Versteifungsstege verbunden sind, die an der inneren Bodenfläche des Anlageflansches angeformt und umfangsgemäß gleichmäßig verteilt angeordnet sind. Bei einer Ausbildung des Außenangriffs zum Beispiel als Sechskant, sind zum Beispiel zwölf Versteifungsstege vorhanden, von denen jeweils sechs Versteifungsstege in den gegenüberliegenden Ecken des Sechskants enden und jeweils sechs Versteifungsstege mittig zwischen den Ecken des Sechskants ausgebildet sind. Hierdurch erfolgt eine gleichmäßige Stabilisierung des Anlageflansches in seinem Umfangsbereich, und es wird ein gleichmäßiger Spannungsverlauf bewirkt. Die Versteifungsstege verhindern ein Abknicken des Anlageflansches beim Verschrauben. Bei einer Ausbildung des Außenangriffs als Sechskant können auch zum Beispiel sechs Versteifungsstege vorhanden sein, wobei hierbei die Höhe des Außenangriffs größer ist als die Höhe des Außenangriffs bei zum Beispiel zwölf Versteifungsstegen. Eine größere Höhe des Außenangriffs erhöht die Steifigkeit des Außenangriffs.

Sofern in weiterer Ausbildung der Erfindung zweckmäßigerweise zwischen dem Anlageflansch und dem Einschraubabschnitt ein nutförmiger Aufnahmeabschnitt für eine Umfangsdichtung ausgebildet ist, wird durch die Ausbildung der Versteifungsstege eine Reduzierung der Spannungen im Querschnitt der Ausnehmung erreicht. Durch die Ausbildung der Versteifungsstege wird eine Erhöhung des Abreißdrehmomentes ermöglicht. Erfindungsgemäß ist insbesondere eine Höhe von 6 bis 8 mm für den Anlageflansch vorteilhaft.

Erfindungsgemäß ist es weiterhin von Vorteil, wenn mindestens ein Leckagepfad am Außenumfang des Einschraubabschnitts in Form einer axial verlaufenden Leckagenut ausgebildet ist. Hierdurch ist es auch möglich, Kondenswasser im System abzulassen, ohne dass die Verschlussschraube vollständig herausgeschraubt werden muss. Somit ist es nicht erforderlich, ein zusätzliches Entwässerungsventil vorzusehen.

Erfindungsgemäß ist es vorteilhaft, wenn die erfindungsgemäße Verschlussschraube aus einem thermoplastischen Konstruktionswerkstoff auf der Basis eines teilkristallinen, partiell aromatischen Copolyamids hergestellt ist, hierbei handelt es sich um Polyphthalamid (PPA) entsprechend der Bezeichnung nach ASTM. Zweckmäßigerweise ist dieses Material glasfaserverstärkt, und zwar mit einem 50 %-igen Gewichtsanteil. Ein derartiges Material ist im Vergleich zu anderen Polyamiden durch eine bessere Leistungsfähigkeit bei hohen Anwendungstemperaturen gekennzeichnet. Aus diesem Material gefertigte Verschlussschrauben sind wärmeformbeständer, steifer, fester und zeigen eine gute Chemikalien-Beständigkeit.

Weitere vorteilhafte Merkmale zur Ausgestaltung der erfindungsgemäßen Verschlussschraube sind in den Unteransprüchen enthalten.

Anhand des in den beiliegenden Zeichnungen dargestellten Ausführungsbeispiels wird die Erfindung näher erläutert. Es zeigen:
- Fig. 1: eine perspektivische Ansicht einer erfindungsgemäßen Verschlussschraube,
- Fig. 2: einen Schnitt entlang der Schnittlinie II-II in Figur 1,
- Fig. 3: einen Schnitt entlang der Schnittlinie III-III in Figur 1,
- Fig. 4: einen Schnitt entlang der Schnittlinie IV-IV in Figur 1,
- Fig. 5: eine perspektivische Ansicht einer weiteren Ausführung einer erfindungsgemäßen Verschlussschraube und
- Fig. 6: einen Schnitt entlang der Schnittlinie VI-VI in Fig. 5.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

Eine erfindungsgemäße Verschlussschraube für eine Austrittsöffnung eines fluidführenden Gehäuseteils umfasst einen im Querschnitt hohlzylindrischen, im Querschnitt kreisförmigen Einschraubabschnitt 1 mit einem Außengewinde 2, wobei an einem Ende des Einschraubabschnitts 1 ein gegenüber dem Einschraubabschnitt im Außendurchmesser vergrößerter Anlageflansch 3 angeformt ist.

Der Einschraubabschnitt 1 und der Anlageflansch 3 sind vorteilhafterweise als einstückiges materialeinheitliches Kunststoff-Spritzgussteil hergestellt, so dass ein integrales Bauteil gebildet ist.

Der Einschraubabschnitt 1 ist mit einem Boden 4 einendig verschlossen, und in Längsrichtung mittig durch den Anlageflansch 3 und den Einschraubabschnitt 1 ist eine Ausnehmung 6 als Innenangriff für ein Werkzeug ausgebildet, die am Boden 4 endet und dem Boden 4 gegenüberliegend eine Einstecköffnung 7 für den Eingriffsabschnitt des Werkzeugs aufweist.

Der Anlageflansch 3 weist eine in Einschraubrichtung X gesehen vordere Anlagefläche 3a und an seinem äußeren Umfang einen Außenangriff 8 für ein Werkzeug auf. Dieser Außenangriff 8 ist insbesondere als Mehrkant und vorzugsweise als regelmäßiger Sechskant geformt. Im Übergangsbereich zwischen dem Anlageflansch 3 und dem Einschraubabschnitt 1 ist eine derartige Wandausbildung der Verschlussschraube vorhanden, dass für einen Abriss des Anlageflansches 3 im eingeschraubten Zustand des Einschraubabschnitts 1 unter Anlage des Anlageflansches 3 an einem Gehäuseteil aufgrund eines gegenüber einem zulässigen Anzugsmoment erhöhten Abrissmomentes ein Abrissbereich in Einschraubrichtung gesehen im Bereich des Endes des Einschraubabschnitts 1 und hinter dem Boden 4 ausgebildet ist, so dass der Kraftfluss innerhalb der Verschlussschraube beim Abriss nicht durch den Boden 4 verläuft, und wobei die Ausnehmung 6 mit dem Innenangriff eine derartige minimale Eingriffslänge L aufweist, dass ein Lösen der Verschlussschraube mittels eines in den Innenangriff 6 eingesetzten Werkzeuges möglich ist. Vorteilhafterweise wird die minimale Eingriffslänge L entsprechend DIN EN ISO 14579 vom Mai 2002 bemessen und ist insbesondere 3,6 mm lang. Hierbei befindet sich die minimale Eingriffslänge L vorteilhafterweise zwischen einer Bodenfläche 9 des Bodens 4 des Anlageflansches 3 und der Anlagefläche 3a des Anlageflansches 3.

Bei einem Anzugsmoment von 17 Nm ist aufgrund der erfindungsgemäßen Ausgestaltung ein Sicherheitsfaktor von 2 für das Abreißmoment in Bezug auf das Anzugsmoment hinsichtlich eines Abrisses des Anlageflansches 3 ausreichend.

Der Anlageflansch 3 weist eine innere Ausnehmung 12 auf, wobei eine äußere Umfangswandung 13 ausgebildet ist, die eine obere Flanschöffnung 14 umschließt. Eine Bodenfläche 9 der Ausnehmung 12 des Anlageflansches 3 ist der Flanschöffnung 14 gegenüberliegend ausgebildet. Die Bodenfläche 9 weist im Längsschnitt gesehen vorteilhafterweise eine konvex gebogene, in die Ausnehmung 12 gerichtete Form auf. Insbesondere liegt der in Einschraubrichtung X gesehen tiefste Bereich der Bodenfläche 9 unterhalb der Einstecköffnung 7 der Ausnehmung 6 des Innenangriffs und der in Einsteckrichtung gesehen hintere, d. h. obere Bereich der Bodenfläche 9 liegt an der Umfangswandung 13 oberhalb der Einstecköffnung 7 der Ausnehmung 6 des Innenangriffs.

Der Boden 4 ist zweckmäßigerweise derart geformt, dass er einen in Einschraubrichtung X in Richtung auf das freie Ende des Einschraubabschnitts 1 versetzten mittleren Bodenabschnitt 4a aufweist und einen den Bodenabschnitt 4a umschließenden Bodenabschnitt 4b, der den mittleren Bodenabschnitt mit einer Umfangwandung 1a des Einschraubabschnitts 1 verbindet, und der vorteilhafterweise senkrecht zur Längsmittelachse des Einschraubabschnitts 1 verläuft. Der Bodenabschnitt 4a ist zum Beispiel in Richtung auf das freie Ende des Einschraubabschnitts 1 konvex ausgebildet. Durch die versetzte Anordnung kann der Bodenabschnitt 4a zum Beispiel zwischen den beiden Enden des Einschraubabschnitts 1 angeordnet sein. Der Bodenabschnitt 4a besitzt eine Breite B zwischen der Ausnehmung 6, die zweckmäßigerweise am Bodenabschnitt 4a endet, und seiner Umfangsfläche. Der Bodenabschnitt 4b ist über einen Wandungsabschnitt 9a, der die Bodenfläche 9 aufweist, mit dem Außenangriff 8 des Anlageflansches 3 verbunden. Dieser Wandungsabschnitt 9a ist, wie oben beschrieben, zweckmäßigerweise konvex ausgebildet.

Weiterhin kann es zweckmäßig sein, wenn zwischen dem Anlageflansch 3 und dem Einschraubabschnitt 1 ein nutförmiger Aufnahmeabschnitt 18 für eine Umfangsdichtung 19 vorhanden ist. Dieser Aufnahmeabschnitt 18 besitzt vorzugsweise im Bereich seines Nutgrundes einen Außendurchmesser, der kleiner ist als ein Kerndurchmesser des Außengewindes 2 des Einschraubabschnitts 1. Die Umfangsdichtung 19 ist insbesondere als O-Ring-Dichtung ausgebildet, deren Außendurchmesser größer ist als ein Gewinde-Außendurchmesser des Außengewindes 2.

Weiterhin kann es zweckmäßig sein, wenn in Einschraubrichtung X gesehen am in Einschraubrichtung X weisenden Ende des Anlageflansches 3 umfangsgemäß ein radial abstehender lippenartiger Fortsatz 20 angeformt ist. Bei Ausbildung als Mehrkant, zum Beispiel als Sechskant, ist dieser lippenartige Fortsatz 20 zwischen den jeweiligen Ecken des Mehrkants, zum Beispiel Außensechskants, vorhanden. Hierdurch wird die Anlagefläche des Anlageflansches 3 zwischen den Ecken des Mehrkants vergrößert, und der Fortsatz 20 ist insbesondere derart ausgebildet, dass der Außendurchmesser im Bereich des Fortsatzes 20 gleich dem Außendurchmesser im Bereich der gegenüberliegenden Ecken des Mehrkants, insbesondere Außensechskants, ist. Durch die Ausbildung als Außensechskant kann der erfindungsgemäße Einschraubabschnitt 1 mit üblichen Schraubenschlüsseln angezogen werden.

Weiterhin ist es erfindungsgemäß von Vorteil, wenn die innere Wand der Umfangswandung 13 des Anlageflansches 3 und der Stutzenabschnitt 16 des Innenangriffs 6 durch Versteifungsstege 21 verbunden sind, die zweckmäßigerweise an der inneren Bodenfläche 9 des Anlageflansches 3 angeformt sind. Vorteilhafterweise sind die Versteifungsstege 21 umfangsgemäß gleichmäßig verteilt angeordnet. Bei einer Ausbildung des Außenangriffs 8 zum Beispiel als Sechskant sind sechs, vorzugsweise zwölf Versteifungsstege 21 vorhanden, von denen jeweils sechs Versteifungsstege 21 in den Ecken des Sechskants enden und jeweils bei der Ausbildung mit zwölf Versteifungsstegen 21 mittig zwischen den Ecken des Sechskants weiterer Versteifungsstege 21 verlaufen. Die Versteifungsstege 21 enden einerseits mit ihrer Oberkante 21a an der oberen Flanschöffnung 14 und andererseits an der Einstecköffnung 7, so dass die Versteifungsstege 21 mit ihrer Oberkante 21a nach innen schräg geneigt verlaufen.

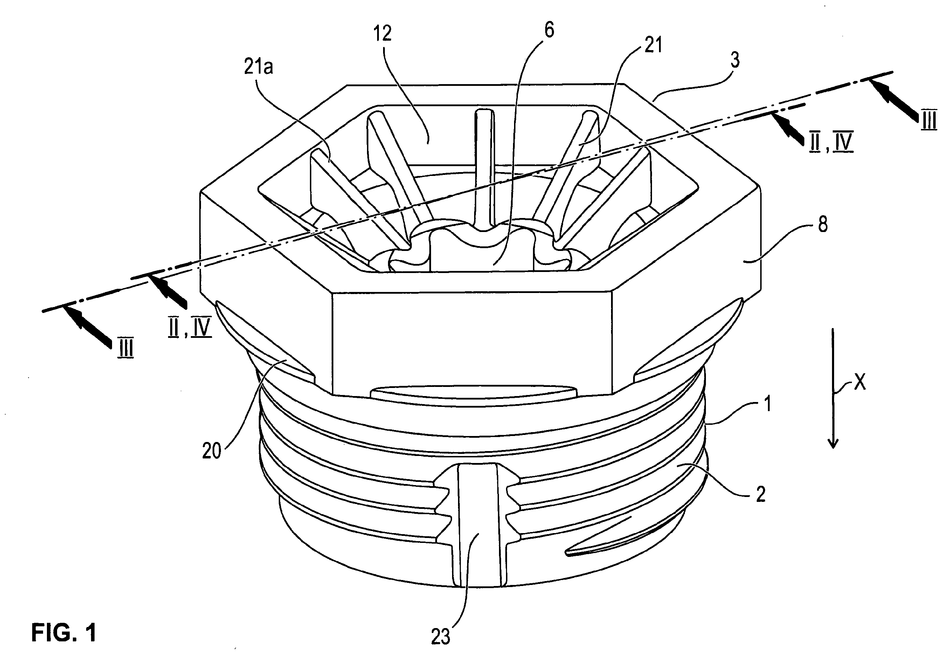

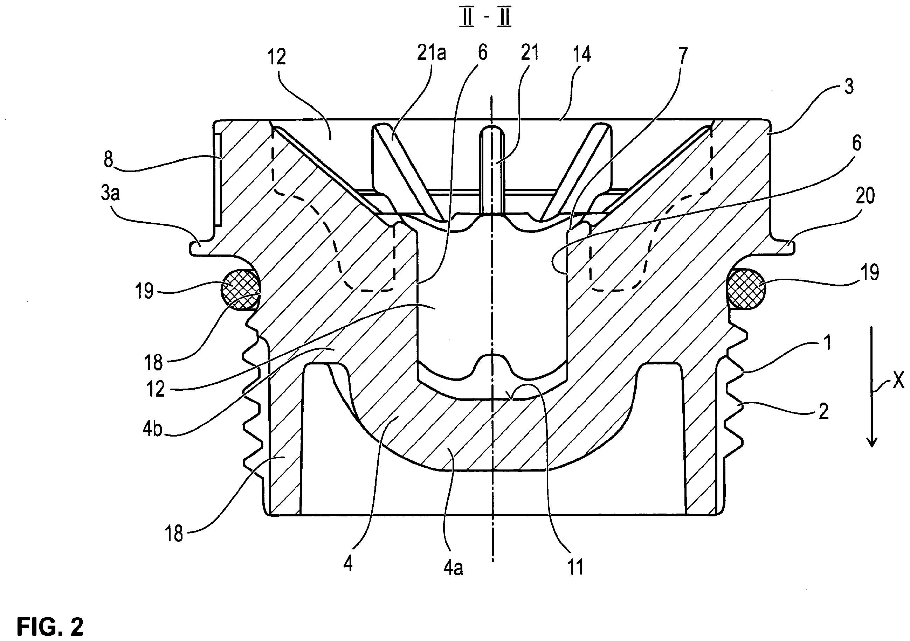

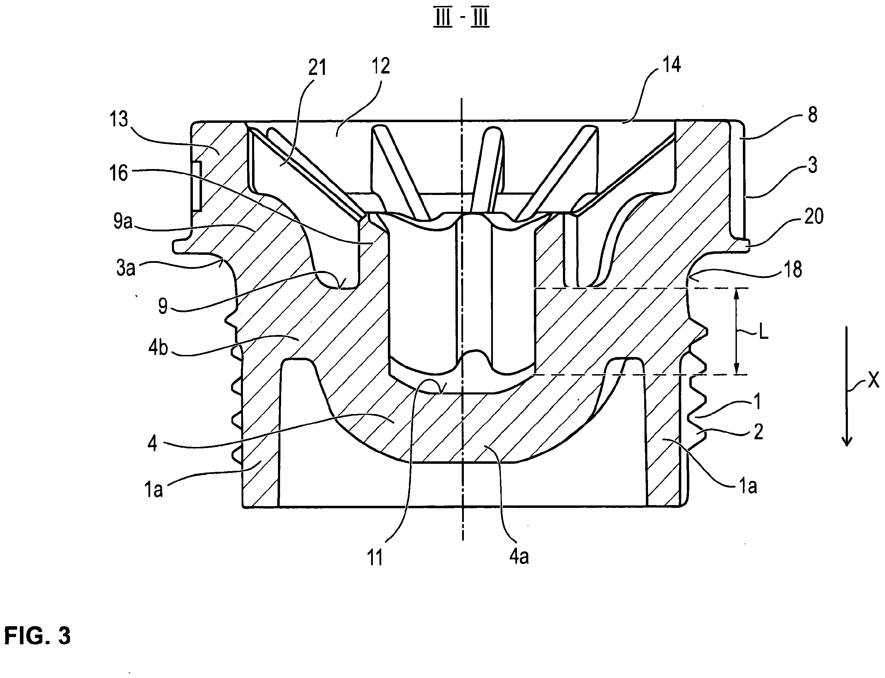

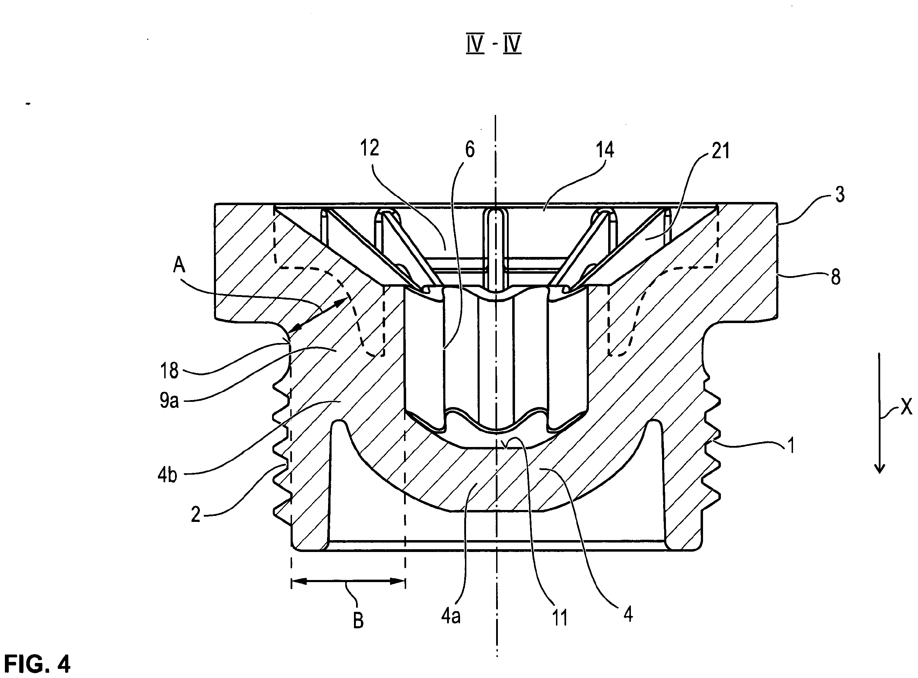

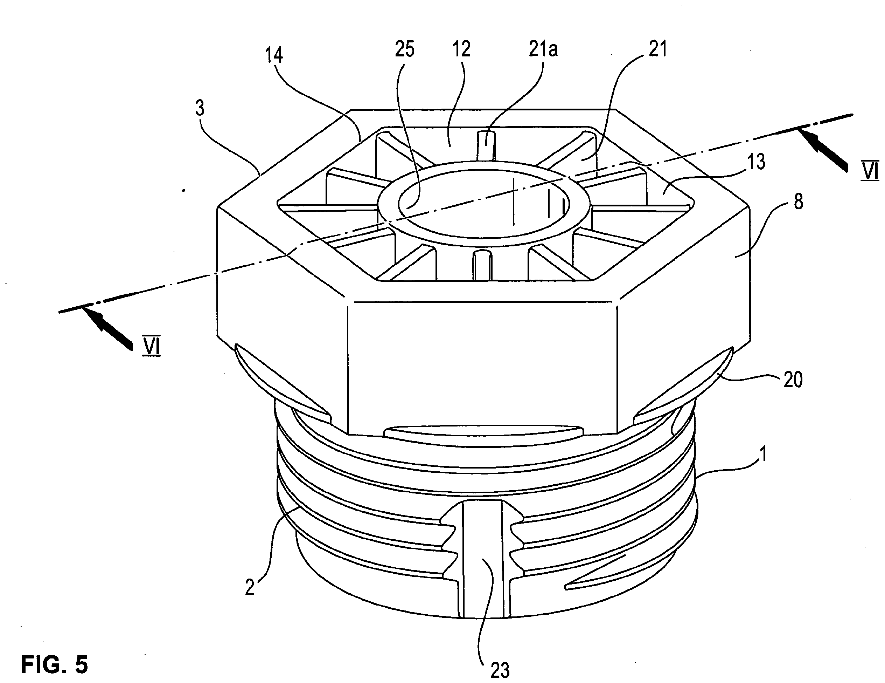

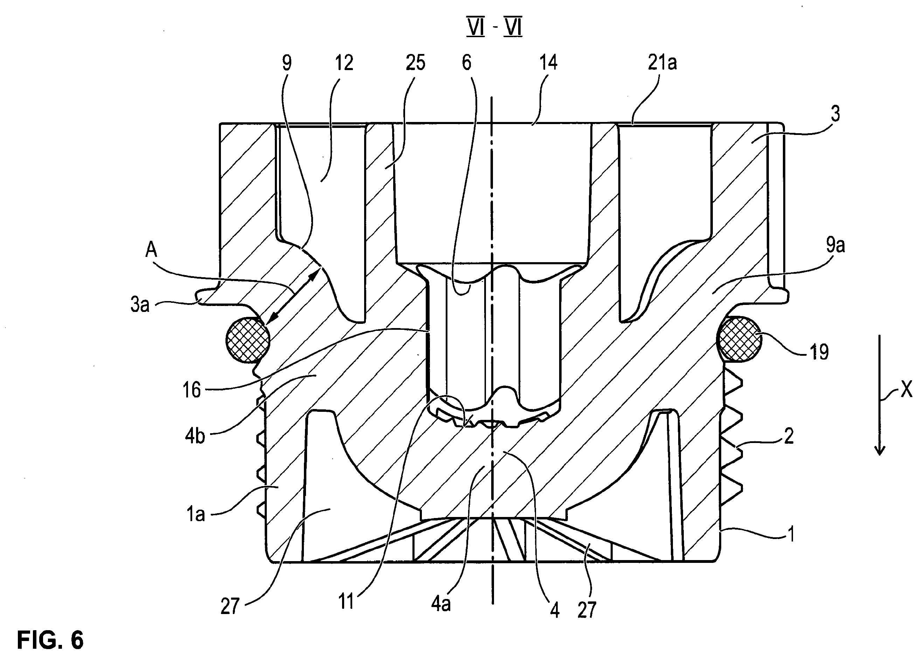

In den Figuren 5 und 6 ist eine weitere Ausbildung einer erfindungsgemäßen Verschlussschraube dargestellt. Hierbei sind gleiche Teile wie bei der Verschlussschraube gemäß den Figuren 1 bis 4 mit denselben Bezugsziffern gekennzeichnet. Im Unterschied zu der vorbeschriebenen Verschlussschraube ist an dem Stutzenabschnitt 16, in dem sich die Ausnehmung 6 für den Innenangriff befindet, ein hohlzylindrischer Fortsatz 25 entgegen der Einschraubrichtung X angeformt. Dieser Fortsatz 25 endet mit seinem freien Ende 26 vorzugsweise in der Ebene der Flanschöffnung 14. Der Innendurchmesser dieses Fortsatzes 25 ist an einen Außendurchmesser eines Werkzeugschaftes angepasst, an dem endseitig der Eingriffsabschnitt ausgebildet ist, der in die Ausnehmung 6 des Innenangriffs passt. Die Versteifungsstege 21 besitzen eine derartige Höhe, dass ihre Oberkante 21a quer, vorzugsweise senkrecht zur Längsmittelachse der Verschlussschraube und somit in der Öffnungsebene der Flanschöffnung 14, verläuft. Die Versteifungsstege 21 sind mit ihrem von der Umfangswand 13 abgewandten Ende an dem Stutzenabschnitt 16 und oberhalb von diesem an dem Fortsatz 25 angebunden. Diese erfindungsgemäße Ausgestaltung der Verschlussschraube erhöht die Steifigkeit des Anlageflansches 3.

Weiterhin ist in Fig. 6 dargestellt, dass es zusätzlich vorteilhaft sein kann, unterhalb des Bodens 4 im Winkelbereich zwischen dem Boden 4 und dem Einschraubabschnitt 1 umfänglich verteilt Verstärkungsstege 27 anzuformen. Diese Verstärkungsstege 27 erhöhen insgesamt die Formsteifigkeit der Verschlussschraube. Es können zum Beispiel zwölf nebeneinander mit gleichem Abstand angeordnete Verstärkungsstege 27 ausgebildet sein. Bis auf die vorstehend beschriebenen Abweichungen entspricht die Ausführung gemäß den Figuren 5 und 6 der Ausführungsform gemäß den Figuren 1 bis 4, wie im Obigen beschrieben.

Durch die erfindungsgemäße Ausbildung der Verschlussschraube wird erreicht, dass bei einem Abriss des Flanschabschnitts 3 der Einschraubabschnitt 1 mit dem Boden 4 innerhalb der Gewindebohrung des Gehäuseteils verbleibt, in das die Verschlussschraube eingeschraubt ist, so dass ein definierter Austritt des Fluids durch die Gewindegänge und insbesondere durch einen gebildeten Leckagepfad gegeben ist. Hierbei kann es von Vorteil sein, wenn in der Umfangsfläche des Einschraubabschnitts 1 im Bereich des Außengewindes 2 mindestens ein axial verlaufender Leckagepfad in Form einer Leckagenut 23 ausgebildet ist, wodurch ein kontrollierter Fluidaustritt bewirkt werden kann. Es ist vorteilhaft, wenn ein vorhandener Leckagepfad am in Einschraubrichtung vorderen Ende des Einschraubabschnitts 1 beginnt und seine axiale Länge mindestens der Höhe von zwei Gewindegängen entspricht. Da erfindungsgemäß der Boden 4 unterhalb des Gewindeendes, d. h. gegenüber diesem in Einschraubrichtung X versetzt verläuft, wird im Übrigen ein sicherer Verschluss der Gehäuseöffnung gewährleistet, wobei durch die erfindungsgemäße Ausbildung sichergestellt ist, dass der nach dem Abriss verbleibende Teil der erfindungsgemäßen Verschlussschraube über den Innenangriff 6 herausgeschraubt werden kann. Bei einer erfindungsgemäßen Verschlussschraube beträgt vorzugsweise das Anziehdrehmoment 10 bis 17 Nm und das Abrissdrehmoment beträgt zweckmäßigerweise 34 Nm. Das LosDrehmoment beträgt beispielsweise mindestens 2,5 Nm.

Zweckmäßigerweise beträgt beispielsweise das Verhältnis der Schlüsselweite W des Außenangriffs 8 zum Kerndurchmesser K des Außengewindes 2 W : D_{K} = 1 : 0,85 bei einer Schlüsselweite von beispielsweise W = 24.

Bei einer erfindungsgemäßen Verschlussschraube beträgt die Höhe des Anlageflansches 3 beispielsweise 7 mm und die Höhe des Fortsatzes 20 beträgt beispielsweise 0,7 mm.

Eine erfindungsgemäße Verschlussschraube wird als Spritzgussteil vorzugsweise aus polymerem Material, insbesondere Polyphthalamide (PPA) hergestellt, wobei es sich hierbei insbesondere um ein glasfaserverstärktes Material mit insbesondere einem 50 %-igen Gewichtsanteil von Glasfasermaterial handelt. Das verwendete Polyphthalamid (PPA) ist hitzestabilisiert und besitzt eine hohe Zugfestigkeit.

Die Erfindung ist nicht auf die dargestellten und beschriebenen Ausführungsbeispiele beschränkt, sondern umfasst auch alle im Sinne der Erfindung gleichwirkenden Ausführungen.

**Bezugszeichenliste**

| | | | |
|---|---|---|---|
| 1 | Einschraubabschnitt | D_{K} | Kerndurchmesser |
| 1a | Umfangswandung | A | Breite von 9a |
| 2 | Außengewinde | B | Breite von 4a |
| 3 | Anlageflansch | L | minimale Eingriffslänge |
| 3a | Anlagefläche | W | Schlüsselweite |
| 4 | Boden | X | Einschraubrichtung |
| 4a,b | Bodenabschnitte | | |
| 6 | Ausnehmung | | |
| 7 | Einstecköffnung | | |
| 8 | Außenangriff | | |
| 9 | Bodenfläche | | |
| 9a | Wandungsabschnitt | | |
| 11 | Innere Bodenfläche | | |
| 12 | Innere Ausnehmung | | |
| 13 | Umfangswandung | | |
| 14 | Flanschöffnung | | |
| 16 | Stutzenabschnitt | | |
| 18 | Aufnahmeabschnitt | | |
| 19 | Umfangsdichtung | | |
| 20 | Fortsatz | | |
| 21 | Versteifungsstege | | |
| 21a | Oberkante der Versteifungsstege | | |
| 23 | Leckagenut | | |
| 25 | Hohlzylindrischer Fortsatz | | |
| 26 | Freies Ende | | |
| 27 | Verstärkungsstege | | |

## Patentansprüche

1. Verschlussschraube für eine Austrittsöffnung von Fluiden führenden Gehäusen umfassend einen kreiszylindrischen Einschraubabschnitt (1) mit einem Außengewinde (2) und einen an einem Ende des Einschraubabschnitts (1) gegenüber dem Einschraubabschnitt (1) im Außendurchmesser vergrößerten Anlageflansch (3), wobei der Einschraubabschnitt (1) mit dem Anlageflansch (3) als einstückiges, materialeinheitliches Kunststoff-Spritzgussteil ausgebildet ist, sowie der Einschraubabschnitt (1) mit einem Boden (4) einendig verschlossen ist und in Längsrichtung mittig durch den Anlageflansch (3) und den Einschraubabschnitt (1) eine Ausnehmung (6) als Innenangriff für ein Werkzeug verläuft, die am Boden (4) endet und dem Boden (4) gegenüberliegend eine Einstecköffnung (7) für das Werkzeug aufweist,
wobei der Anlageflansch (3) an seinem äußeren Umfang einen Außenangriff (8) für ein Werkzeug aufweist, wobei zwischen dem Außenangriff (8) und dem Innenangriff (6) eine umlaufende innere Ausnehmung (12) mit einer Flanschöffnung (14) ausgebildet ist, wobei die innere Ausnehmung (12) derart ausgebildet ist, dass eine äußere Umfangswandung (13) ausgebildet ist, die die obere Flanschöffnung (14) umschließt, und im Anlagenflansch (3) zwischen dem Innenangriff (6) und der Umfangswandung (13) eine innere Bodenfläche (9) des Flansches (3) der Flanschöffnung (14) gegenüberliegend ausgebildet ist, und die Einstecköffnung (7) des Innenangriffs (6) in Einschraubrichtung (X) gesehen gegenüber der Bodenfläche (9) des Anlageflansches (3) zurückversetzt angeordnet ist, so dass ein in Richtung auf die Flanschöffnung (14) von der Bodenfläche (9) vorstehender, unterhalb der Flanschöffnung (14) endender und die Einstecköffnung (7) umfassender Stutzenabschnitt (16) ausgebildet ist, und im Übergangsbereich zwischen dem Anlageflansch (3) und dem Einschraubabschnitt (1) eine derartige Wandausbildung vorhanden ist, dass für einen Abriss des Anlageflansches (3) im eingeschraubten Zustand des Einschraubabschnitts (1) und der Anlage des Anlageflansches (3) aufgrund eines gegenüber dem zulässigen Anzugsmoment erhöhten Abrissmomentes am Außenangriff (8) in Einschraubrichtung (X) gesehen im Bereich des am Ende des Einschraubabschnitts (1) und hinter dem Boden (4) ein Abrissbereich ausgebildet ist, so dass der Kraftfluss innerhalb der Verschlussschraube beim Abriss nicht durch den Boden (4) verläuft, wobei eine derartige minimale Eingriffslänge (L) der Ausnehmung (6) für den Innenangriff vorhanden ist, dass ein Lösen der Verschlussschraube mittels eines in den Innenangriff (6) eingesetzten Werkzeugs möglich ist.

2. Verschlussschraube nach Anspruch 1,
**dadurch gekennzeichnet, dass** die minimale Eingriffslänge (L) entsprechend DIN EN ISO 14579 vom Mai 2002 bemessen ist und insbesondere 2,9 mm beträgt.

3. Verschlussschraube nach Anspruch 1 oder 2,
**dadurch gekennzeichnet, dass** sich die minimale Eingriffslänge (L) zwischen der Anlagefläche (3a) des Anlageflansches (3) und einer inneren Bodenfläche (11) des Innenangriffs (6) befindet.

4. Verschlussschraube nach einem der Ansprüche 1 bis 3,
**dadurch gekennzeichnet, dass** der Boden (4) derart geformt ist, dass er einen in Richtung auf das freie Ende des Einschraubabschnitts (1) versetzten mittleren Bodenabschnitt (4a) aufweist sowie einen diesen mittleren Bodenabschnitt (4a) umschließenden Bodenabschnitt (4b), der mit einer Umfangswandung (1a) des Einschraubabschnitts (1) verbunden ist und insbesondere senkrecht zur Längsmittelachse verläuft.

5. Verschlussschraube nach Anspruch 4,
**dadurch gekennzeichnet, dass** der Bodenabschnitt (4b) eine Breite B besitzt und über einen Wandungsabschnitt (9a), der eine konvex gekrümmte Bodenfläche (9) der inneren Ausnehmung (12) aufweist, mit dem den Außenangriff (8) aufweisenden Bereich des Anlageflansches (3) verbunden ist, der eine radiale Breite A besitzt, wobei die Breite B 20 % bis 30 % größer ist als die Breite A.

6. Verschlussschraube nach einem der Ansprüche 1 bis 5,
**dadurch gekennzeichnet, dass** die axiale Länge des Innenangriffs (6) derart ausgebildet ist, dass ausgehend von seiner Einstecköffnung (7) seine innere Bodenfläche (11) im Bereich des Endes des Einschraubabschnitts (1) derart angeordnet ist, dass das Außengewinde (2) in Einschraubrichtung (X) gesehen hinter der inneren Bodenfläche (11) endet.

7. Verschlussschraube nach einem der Ansprüche 1 bis 6,
**dadurch gekennzeichnet, dass** zwischen dem Anlageflansch (3) und dem Einschraubabschnitt (1) ein nutförmiger Aufnahmeabschnitt (18) für eine Umfangsdichtung (19) ausgebildet ist.

8. Verschlussschraube nach Anspruch 7,
**dadurch gekennzeichnet, dass** der Aufnahmeabschnitt (18) im Bereich seines Nutgrundes einen Außendurchmesser aufweist, der kleiner ist als ein Kerndurchmesser des Außengewindes (2) des Einschraubabschnitts (1).

9. Verschlussschraube nach Anspruch 7 oder 8,
**dadurch gekennzeichnet, dass** die Umfangsdichtung (19) als O-Ring-Dichtung ausgebildet ist, deren Außendurchmesser größer ist als ein Gewindeaußendurchmesser des Außengewindes (2).

10. Verschlussschraube nach einem der Ansprüche 1 bis 9,
**dadurch gekennzeichnet, dass** der Außenangriff (8) als Mehrkant, insbesondere regelmäßiger Sechskant, ausgebildet ist.

11. Verschlussschraube nach Anspruch 10,
**dadurch gekennzeichnet, dass** an dem in Einschraubrichtung (X) weisenden Ende des Anlageflansches (3) umfangsgemäß ein radial vorstehender, lippenartiger Fortsatz (20) zwischen den Ecken des Sechskantes ausgebildet ist, wobei vorzugsweise der Durchmesser des lippenartigen Fortsatzes (20) gleich dem Außendurchmesser des Sechskantes im Bereich seiner gegenüberliegenden Ecken ist.

12. Verschlussschraube nach einem der Ansprüche 1 bis 11,
**dadurch gekennzeichnet, dass** die äußere Umfangswandung (13) des Anlageflansches (3) und der Stutzenabschnitt (16) des Innenangriffs (6) durch Versteifungsstege (21) verbunden sind, die an der inneren Bodenfläche (9) angeformt und umfangsgemäß gleichmäßig verteilt angeordnet sind.

13. Verschlussschraube nach Anspruch 12,
**dadurch gekennzeichnet, dass** die Versteifungsstege (21) mit ihrer freien Oberkante (21a) in der Öffnungsebene der Flanschöffnung (14) verlaufen und mit ihrem der Umfangswandung (13) gegenüberliegenden Ende an einem hohlzylindrischen Fortsatz (25) des Stutzenabschnitts (16) angebunden sind.

14. Verschlussschraube nach Anspruch 13,
**dadurch gekennzeichnet, dass** die Versteifungsstege (21) mit ihrer Oberkante (21a) in der Öffnungsebene der Flanschöffnung (14) senkrecht zur Mittellängsachse verlaufen und der Fortsatz (25) mit seinem freien Ende (26) ebenfalls in der Öffnungsebene der Flanschöffnung (14) endet.

15. Verschlussschraube nach einem der Ansprüche 12 bis 14,
**dadurch gekennzeichnet, dass** bei einer Ausbildung des Außenangriffs (8) als Sechskant zwölf Versteifungsstege (21) ausgebildet sind, von denen jeweils sechs Versteifungsstege (21) in den gegenüberliegenden Ecken des Sechskantes enden, und jeweils sechs Versteifungsstege (21) mittig zwischen den Ecken des Sechskantes ausgebildet sind.

16. Verschlussschraube nach einem der Ansprüche 1 bis 15,
**dadurch gekennzeichnet, dass** im Einschraubabschnitt (1) an dessen Umfangsfläche im Bereich des Außengewindes (2) mindestens eine axial verlaufende Leckagenut (23) ausgebildet ist.

17. Verschlussschraube nach einem der Ansprüche 1 bis 16,
**dadurch gekennzeichnet, dass** das Verhältnis W : D_{K} einer Schlüsselweite W des Außenangriffs (8) zu einem Kerndurchmesser D_{K} des Außengewindes (2) 1 : 0,85 beträgt.

18. Verschlussschraube nach einem der Ansprüche 1 bis 17,
**dadurch gekennzeichnet, dass** die Verschlussschraube aus Polyphthalamid (PPA) besteht, das insbesondere glasfaserverstärkt ist.

## Claims

1. Closure screw for an outlet opening of housings which carry fluids, comprising a circular-cylindrical screw-in portion (1) with an outer thread (2), and comprising a bearing flange (3) at one end of the screw-in portion (1) that has an enlarged outer diameter in relation to the screw-in portion (1), wherein the screw-in portion (1) is formed with the bearing flange (3) as a one-piece, materially uniform plastic injection-moulding part, and the screw-in portion (1) is closed off at one end by a base (4), and a recess (6) serving as an inner engagement means for a tool extends centrally through the bearing flange (3) and the screw-in portion (1) in a longitudinal direction and ends at the base (4) and has, opposite the base (4), an insertion opening (7) for the tool, wherein the bearing flange (3) has, on its outer periphery, an outer engagement means (8) for a tool, wherein a peripheral inner recess (12) with a flange opening (14) is formed between the outer engagement means (8) and the inner engagement means (6), wherein the inner recess (12) is formed in such a way that an outer peripheral wall (13) which surrounds the upper flange opening (14) is formed and an inner base surface (9) of the flange (3) is formed, opposite the flange opening (14), in the bearing flange (3) between the inner engagement means (6) and the peripheral wall (13), and the insertion opening (7) of the inner engagement means (6) is arranged, as seen in the screw-in direction (X), set back in relation to the base surface (9) of the bearing flange (3), such that a connector portion (16) which projects from the base surface (9) in the direction of the flange opening (14) and ends below the flange opening (14) and surrounds the insertion opening (7) is formed, and, in the transition region between the bearing flange (3) and the screw-in portion (1), there is provided a wall formation such that, for breaking-off of the bearing flange (3) in the screwed-in state of the screw-in portion (1) and of the abutment of the bearing flange (3) owing to an increased break-off moment at the outer engagement means (8) in relation to the permissible tightening moment, there is formed, as seen in the screw-in direction (X), in the region of the at the end of the screw-in portion (1) and behind the base (4), a break-off region, such that the flow of force within the closure screw, in the event of breaking-off, does not pass through the base (4), wherein there is provided a minimum engagement length (L) of the recess (6) for the inner engagement such that loosening of the closure screw by means of a tool inserted into the inner engagement means (6) is possible.

2. Closure screw according to Claim 1, **characterized in that** the minimum engagement length (L) is dimensioned according to DIN EN ISO 14579 of May 2002 and is in particular 2.9 mm.

3. Closure screw according to Claim 1 or 2, **characterized in that** the minimum engagement length (L) is situated between the bearing surface (3a) of the bearing flange (3) and an inner base surface (11) of the inner engagement means (6).

4. Closure screw according to one of Claims 1 to 3,
**characterized in that** the base (4) is shaped in such a way that it has a central base portion (4a), which is offset in the direction of the free end of the screw-in portion (1), and a base portion (4b), which surrounds said central base portion (4a) and is connected to a peripheral wall (1a) of the screw-in portion (1) and extends in particular perpendicularly to the longitudinal central axis.

5. Closure screw according to Claim 4,
**characterized in that** the base portion (4b) has a width B and is connected, via a wall portion (9a) having a convexly curved base surface (9) of the inner recess (12), to that region of the bearing flange (3) which has the outer engagement means (8), said region having a radial width A, wherein the width B is 20% to 30% greater than the width A.

6. Closure screw according to one of Claims 1 to 5, **characterized in that** the axial length of the inner engagement means (6) is configured such that, proceeding from its insertion opening (7), its inner base surface (11) is arranged in the region of the end of the screw-in portion (1) in such a way that the outer thread (2) ends, as seen in the screw-in direction (X), behind the inner base surface (11).

7. Closure screw according to one of Claims 1 to 6, **characterized in that** a groove-shaped receiving portion (18) for a peripheral seal (19) is formed between the bearing flange (3) and the screw-in portion (1).

8. Closure screw according to Claim 7,
**characterized in that** the receiving portion (18) has, in the region of its groove base, an outer diameter which is smaller than a core diameter of the outer thread (2) of the screw-in portion (1).

9. Closure screw according to Claim 7 or 8, **characterized in that** the peripheral seal (19) is in the form of an O-ring seal whose outer diameter is greater than a thread outer diameter of the outer thread (2).

10. Closure screw according to one of Claims 1 to 9, **characterized in that** the outer engagement means (8) is formed as a polygon, in particular a regular hexagon.

11. Closure screw according to Claim 10, **characterized in that** a radially projecting lip-like extension (20) is formed between the corners of the hexagon in a peripheral manner at that end of the bearing flange (3) which faces in the screw-in direction (X), wherein preferably the diameter of the lip-like extension (20) is equal to the outer diameter of the hexagon in the region of the oppositely situated corners thereof.

12. Closure screw according to one of Claims 1 to 11, **characterized in that** the outer peripheral wall (13) of the bearing flange (3) and the connector portion (16) of the inner engagement means (6) are connected by stiffening webs (21) which are formed on the inner base surface (9) and which are arranged in a peripherally uniformly distributed manner.

13. Closure screw according to Claim 12, **characterized in that** the stiffening webs (21) extend with their free upper edge (21a) in the opening plane of the flange opening (14) and are attached at their end opposite the peripheral wall (13) to a hollow-cylindrical extension (25) of the connector portion (16).

14. Closure screw according to Claim 13, **characterized in that** the stiffening webs (21) extend with their upper edge (21a) in the opening plane of the flange opening (14) perpendicularly to the central longitudinal axis, and the extension (25) ends with its free end (26) in the opening plane of the flange opening (14) too.

15. Closure screw according to one of Claims 12 to 14, **characterized in that,** in one embodiment of the outer engagement means (8) as a hexagon, there are formed twelve stiffening webs (21), of which in each case six stiffening webs (21) end in the oppositely situated corners of the hexagon and in each case six stiffening webs (21) are formed centrally between the corners of the hexagon.

16. Closure screw according to one of Claims 1 to 15, **characterized in that** at least one axially extending leakage groove (23) is formed on the peripheral surface of the screw-in portion (1) in the region of the outer thread (2).

17. Closure screw according to one of Claims 1 to 16, **characterized in that** the ratio W:D_{K} of a width across flats W of the outer engagement means (8) to a core diameter D_{K} of the outer thread (2) is 1:0.85.

18. Closure screw according to one of Claims 1 to 17, **characterized in that** the closure screw consists of polyphthalamide (PPA), which is in particular glass fibre-reinforced.

## Revendications

1. Bouchon fileté pour une ouverture de sortie de boîtiers conduisant des fluides comprenant une portion filetée (1) cylindrique circulaire avec un filetage extérieur (2) et une bride d'appui (3) à une extrémité de la portion filetée (1), ayant un diamètre extérieur agrandi par rapport à la portion filetée (1), la portion filetée (1) étant réalisée avec la bride d'appui (3) sous forme de pièce moulée par injection de plastique venue de matière et d'une seule pièce, et la portion filetée (1) étant fermée à une extrémité avec un fond (4), et un évidement (6), en tant que prise d'engagement intérieure pour un outil, s'étendant dans la direction longitudinale centralement à travers la bride d'appui (3) et la portion filetée (1), lequel évidement se termine au niveau du fond (4) et présente, à l'opposé du fond (4), une ouverture d'enfichage (7) pour l'outil, la bride d'appui (3) présentant, au niveau de sa périphérie extérieure, une prise d'engagement extérieure (8) pour un outil, un évidement intérieur périphérique (12) avec une ouverture de bride (14) étant réalisé entre la prise d'engagement extérieure (8) et la prise d'engagement intérieure (6), l'évidement intérieur (12) étant réalisé de telle sorte qu'une paroi périphérique extérieure (13) soit réalisée, laquelle entoure l'ouverture de bride supérieure (14), et une surface de fond intérieure (9) de la bride (3) étant réalisée dans la bride d'appui (3) entre la prise d'engagement intérieure (6) et la paroi périphérique (13) à l'opposé de l'ouverture de bride (14), et l'ouverture d'enfichage (7) de la prise d'engagement intérieure (6), vu dans la direction de vissage (X), étant disposée de manière décalée en arrière par rapport à la surface de fond (9) de la bride d'appui (3), de telle sorte qu'une portion de tubulure (16) faisant saillie depuis la surface de fond (9) dans la direction de l'ouverture de bride (14), se terminant en dessous de l'ouverture de bride (14) et comprenant l'ouverture d'enfichage (7) soit réalisée, et dans la région de transition entre la bride d'appui (3) et la portion filetée (1) étant prévue une réalisation de paroi telle que, dans le cas d'une rupture de la bride d'appui (3) dans l'état vissé de la portion filetée (1) et de l'appui de la bride d'appui (3), sous l'effet d'un couple de rupture accru par rapport au couple de vissage admis, appliqué au niveau de la prise d'engagement extérieure (8), vu dans la région de vissage (X), dans la région de à l'extrémité de la portion filetée (1) et derrière le fond (4), une région de rupture soit réalisée de telle sorte que le flux de forces à l'intérieur du bouchon fileté ne s'étende pas à travers le fond (4) lors de la rupture, une longueur d'engagement minimale (L) de l'évidement (6) pour la prise d'engagement intérieure étant prévue de telle manière qu'un desserrage du bouchon fileté au moyen d'un outil inséré dans la prise d'engagement intérieure (6) soit possible.

2. Bouchon fileté selon la revendication 1, **caractérisé en ce que** la longueur d'engagement minimale (L) est dimensionnée conformément à la norme DIN EN ISO 14579 de mai 2002 et vaut en particulier 2,9 mm.

3. Bouchon fileté selon la revendication 1 ou 2, **caractérisé en ce que** la longueur d'engagement minimale (L) est située entre la surface d'appui (3a) de la bride d'appui (3) et une surface de fond intérieure (11) de la prise d'engagement intérieure (6).

4. Bouchon fileté selon l'une quelconque des revendications 1 à 3,
**caractérisé en ce que** le fond (4) est formé de telle sorte qu'il présente une portion de fond centrale (4a) décalée dans la direction de l'extrémité libre de la portion filetée (1) et une portion de fond (4b) entourant cette portion de fond centrale (4a), qui est connectée à une paroi périphérique (1a) de la portion filetée (1) et qui s'étend notamment perpendiculairement à l'axe médian longitudinal.

5. Bouchon fileté selon la revendication 4, **caractérisé en ce que** la portion de fond (4b) présente une largeur B et, sur une portion de paroi (9a) qui présente une surface de fond de courbure convexe (9) de l'évidement intérieur (12), est connectée à la région de la bride d'appui (3) présentant la prise d'engagement extérieure (8), qui possède une largeur radiale A, la largeur B étant de 20 % à 30 % supérieure à la largeur A.

6. Bouchon fileté selon l'une quelconque des revendications 1 à 5,
**caractérisé en ce que** la longueur axiale de la prise d'engagement intérieure (6) est réalisée de telle sorte que, partant de son ouverture d'enfichage (7), sa surface de fond intérieure (11) soit disposée dans la région de l'extrémité de la portion filetée (1) de telle sorte que le filetage extérieur (2), vu dans la direction de vissage (X), se termine derrière la surface de fond intérieure (11).

7. Bouchon fileté selon l'une quelconque des revendications 1 à 6,
**caractérisé en ce qu'une** portion de réception en forme de rainure (18) pour un joint d'étanchéité périphérique (19) est réalisée entre la bride d'appui (3) et la portion filetée (1).

8. Bouchon fileté selon la revendication 7, **caractérisé en ce que** la portion de réception (18) présente, dans la région de son fond de rainure, un diamètre extérieur qui est inférieur à un diamètre de noyau du filetage extérieur (2) de la portion filetée (1).

9. Bouchon fileté selon la revendication 7 ou 8, **caractérisé en ce que** le joint d'étanchéité périphérique (19) est réalisé sous forme de joint torique dont le diamètre extérieur est supérieur à un diamètre extérieur de filetage du filetage extérieur (2).

10. Bouchon fileté selon l'une quelconque des revendications 1 à 9,
**caractérisé en ce que** la prise d'engagement extérieure (8) est réalisée sous forme de profil polygonal, en particulier sous forme de profil hexagonal régulier.

11. Bouchon fileté selon la revendication 10, **caractérisé en ce qu'**une saillie de type lèvre (20), faisant saillie radialement sur la périphérie au niveau de l'extrémité, tournée dans la direction de vissage (X), de la bride d'appui (3), est réalisée entre les coins du profil hexagonal, le diamètre de la saillie de type lèvre (20) étant de préférence identique au diamètre extérieur du profil hexagonal dans la région de ses coins opposés.

12. Bouchon fileté selon l'une quelconque des revendications 1 à 11,
**caractérisé en ce que** la paroi périphérique extérieure (13) de la bride d'appui (3) et la portion de tubulure (16) de la prise d'engagement intérieure (6) sont connectées par des nervures de rigidification (21) qui sont façonnées au niveau de la surface de fond intérieure (9) et qui sont disposées de manière répartie uniformément sur la périphérie.

13. Bouchon fileté selon la revendication 12, **caractérisé en ce que** les nervures de rigidification (21) s'étendent avec leur arête supérieure libre (21a) dans le plan d'ouverture de l'ouverture de bride (14) et sont raccordées, avec leur extrémité opposée à la paroi périphérique (13), à une saillie cylindrique creuse (25) de la portion de tubulure (16).

14. Bouchon fileté selon la revendication 13, **caractérisé en ce que** les nervures de rigidification (21) s'étendent avec leur arête supérieure (21a) dans le plan d'ouverture de l'ouverture de bride (14) perpendiculairement à l'axe médian longitudinal et la saillie (25) se termine également avec son extrémité libre (26) dans le plan d'ouverture de l'ouverture de bride (14) .

15. Bouchon fileté selon l'une quelconque des revendications 12 à 14,
**caractérisé en ce que** dans le cas d'une réalisation de la prise d'engagement extérieure (8) en tant que profil hexagonal, douze nervures de rigidification (21) sont réalisées, dont à chaque fois six nervures de rigidification (21) se terminent dans les coins opposés du profil hexagonal et à chaque fois six nervures de rigidification (21) sont réalisées centralement entre les coins du profil hexagonal.

16. Bouchon fileté selon l'une quelconque des revendications 1 à 15, **caractérisé en ce qu'**au moins une rainure de fuite s'étendant axialement (23) est réalisée dans la portion filetée (1), au niveau de sa surface périphérique, dans la région du filetage extérieur (2).

17. Bouchon fileté selon l'une quelconque des revendications 1 à 16,
**caractérisé en ce que** le rapport W : D_{K} d'une largeur de clé W de la prise d'engagement extérieure (8) à un diamètre de noyau D_{K} du filetage extérieur (2) vaut 1 : 0,85.

18. Bouchon fileté selon l'une quelconque des revendications 1 à 17,
**caractérisé en ce que** le bouchon fileté se compose de polyphthalamide (PPA) qui est notamment renforcé par des fibres de verre.
